(19) Europäisches Patentamt / European Patent Office / Office européen des brevets

(11) **EP 4 576 386 A2**

(12) **EUROPEAN PATENT APPLICATION**

(43) Date of publication:
**25.06.2025 Bulletin 2025/26**

(21) Application number: **24218462.0**

(22) Date of filing: **09.12.2024**

(51) International Patent Classification (IPC):
**H01M 50/403** (2021.01)    **H01M 50/443** (2021.01)
**H01M 50/446** (2021.01)    **H01M 50/451** (2021.01)
**H01M 50/489** (2021.01)    **H01M 50/491** (2021.01)

(52) Cooperative Patent Classification (CPC):
**H01M 50/403; H01M 50/443; H01M 50/446;
H01M 50/451; H01M 50/489; H01M 50/491**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230189441**

(71) Applicants:
• **SK Innovation Co., Ltd.
Seoul 03188 (KR)**
• **SK ie technology Co., Ltd.
Jongno-gu
Seoul
03188 (KR)**

(72) Inventors:
• **KWACK, Won Sub
34124 Daejeon (KR)**
• **JI, Sang Yoon
34124 Daejeon (KR)**
• **LEE, Soon Bo
34124 Daejeon (KR)**
• **JEUN, Jeong Hoon
34124 Daejeon (KR)**

(74) Representative: **Prüfer & Partner mbB
Patentanwälte · Rechtsanwälte
Sohnckestraße 12
81479 München (DE)**

(54) **SEPARATOR AND ELECTROCHEMICAL DEVICE COMPRISING THE SAME, AND METHOD FOR PRODUCING THE SAME**

(57)    Embodiments of the present disclosure relate to a separator in which each pore diameter (D10, D50, D90) satisfies all of 180 nm ≤ D10 ≤ 350 nm, 380 nm ≤ D50 ≤ 650 nm, and 670 nm ≤ D90 ≤ 1000 nm. The separator according to an example embodiment has improved heat resistance by satisfying the predetermined pore diameter ranges, and a battery comprising the separator may have improved performance.

EP 4 576 386 A2

**Description**

**TECHNICAL FIELD**

The following disclosure relates to a separator and an electrochemical device comprising the same.

**BACKGROUND**

A separator of a battery in an electrochemical device is very important for improving stability, lifespan, and performance of the battery. The main function of the separator is to provide an ion migration path in a battery and prevent a physical contact between a negative electrode and a positive electrode, and a battery having excellent performance may be manufactured by improving the characteristics of the separator.

In order to improve the characteristics of the separator used in the battery, a multilayer separator is formed by laminating a porous polymer such as polyolefin-based or polypropylene-based polymers, or a separator having a coating layer formed by mixing a binder and inorganic particles on a porous polymer used as a substrate. The multilayer separator or the coating layer in which a binder and optional other components are mixed may improve various characteristics of a separator as compared with a single-layer separator, but the thickness of the separator may be increased, and the performance of a battery may be rather degraded due to low permeability, decreased wettability, and reduced impregnation. In order to solve the problems as such, research is in progress for manufacturing a separator which has various characteristics sufficiently appropriate for the separator of a battery, and which is thin and satisfies mechanical and chemical stability to improve battery performance.

**SUMMARY**

An embodiment of the present disclosure is directed to providing a separator for an electrochemical device having excellent heat resistance and adhesive strength.

Another embodiment of the present disclosure is directed to providing an electrochemical device comprising the separator.

In one general aspect, a separator satisfying all of the pore size (D10, D50, D90) ranges of the following Equations 1 to 3 is provided:

$$180 \text{ nm} \leq D10 \leq 350 \text{ nm} \qquad \text{(Equation 1)}$$

$$380 \text{ nm} \leq D50 \leq 650 \text{ nm} \qquad \text{(Equation 2)}$$

$$670 \text{ nm} \leq D90 \leq 1000 \text{ nm} \qquad \text{(Equation 3)}$$

In another general aspect, an electrochemical device comprises the separator according to the aforementioned general aspect and according to embodiments thereof further exemplified below.

In another general aspect, the present disclosure provides a method for producing a separator and specifically for the manufacture of an electrochemical device, such as a secondary battery.

Other features and aspects will be apparent from the following detailed description and the claims.

**DETAILED DESCRIPTION OF EMBODIMENTS**

Since the embodiments described in the present specification may be modified in many different forms, the technology according to an example embodiment is not limited to the embodiments set forth herein. Furthermore, throughout the specification, unless otherwise particularly stated, the word "comprising", "comprising", "containing", "being provided with", or "having" does not mean the exclusion of any other constituent element, but rather means further inclusion of other constituent elements, and elements, materials, or processes which are not further listed are not excluded.

The numerical range used in the present specification comprises all values within the range comprising the lower limit and the upper limit, increments logically derived in a form and spanning in a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also comprised in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Hereinafter, unless otherwise particularly defined in the present specification, "(meth)acryl" refers to acryl and/or methacryl.

Unless otherwise defined in the present specification, an average particle diameter of inorganic particles refers to a D50 value.

Unless otherwise defined in the present specification, when it is said that a part such as a layer, a film, a thin film, a region, or a plate is "on" or "above" the other part, the part may be "directly on" the other part, and also, another part may intervene therebetween.

Unless otherwise defined in the present specification, a "polymer" refers to a molecule having a relatively high molecular weight, and its structure may comprise multiple repetition of a unit derived from a low molecular weight molecule. In an embodiment, the polymer may be an alternating copolymer, a block copolymer, a random copolymer, a graft copolymer, a gradient copolymer, a branched copolymer, a crosslinked copolymer, or a copolymer comprising all of them (for example, a polymer comprising more than one monomer). In another embodiment, the polymer may be a homopolymer (for example, a polymer comprising one monomer).

An example embodiment provides a separator having high heat resistance and excellent adhesive strength between a porous substrate and an inorganic particle layer. Specifically, the separator for an electrochemical device according to an example embodiment is characterized by satisfying all of the pore sizes (diameter) D10, D50, and D90 of 180 nm ≤ D10 ≤ 350 nm, 380 nm ≤ D50 ≤ 650 nm, and 670 nm ≤ D90 ≤ 1000 nm. The separator according to an example embodiment was devised by first recognizing the fact that the separator may improve heat resistance of the separator, allow uniform migration of a lithium ion during charge and discharge of a battery comprising the separator, and also, effectively suppress a side reaction problem by moisture, by satisfying the predetermined pore size range.

The effect is due to the fact that the pore diameters (D10, D50, D90) of the separator all satisfy the predetermined ranges, and is not affected only by the constituent elements of the separator or any specific elements during the manufacturing process of the separator. As confirmed in an example embodiment, since the pore diameter range of the separator may be implemented by various means comprising various factors such as an average particle diameter or weight ratio of an inorganic material, a slurry solid content, and a coating speed, the way the pore diameter range of the separator is implemented is not limited.

Therefore, whatever the manufacturing conditions of the separator are, that is, whatever the content and type of a binder, a dispersant, and a lubricant, the slurry solid content, and the rotation speed and/or bead size in a slurry preparation step is/are, whether a smoothing bar is used, whatever the drying temperature is, whatever the porous substrate is, whatever the electrolyte of a battery is, and when the separator comprises an inorganic particle layer, whatever the average particle diameter, distribution, or combination of inorganic materials comprised in the inorganic particle layer is, the heat resistance of the separator is excellent and the characteristics (life characteristics, charge and discharge characteristics, and optionally further battery characteristics) of a battery manufactured using the separator are excellent when the pore diameter ranges of Equations 1 to 3 of the separator of an example embodiment is satisfied.

In an example embodiment, the pore diameter of the separator may satisfy, specifically, all of the following Equations 1-1 to 3-1:

$$200 \text{ nm} \leq D10 \leq 350 \text{ nm} \qquad \text{(Equation 1-1)}$$

$$400 \text{ nm} \leq D50 \leq 650 \text{ nm} \qquad \text{(Equation 2-1)}$$

$$700 \text{ nm} \leq D90 \leq 950 \text{ nm} \qquad \text{(Equation 3-1)}.$$

Otherwise, the pore diameter of the separator may satisfy 220 nm ≤ D10 ≤ 330 nm, 230 nm ≤ D10 ≤ 330 nm, 230 nm ≤ D10 ≤ 320 nm, or 230 nm ≤ D10 ≤ 310 nm. Otherwise, the pore diameter of the separator may satisfy 400 nm ≤ D50 ≤ 630 nm, 400 nm ≤ D50 ≤ 620 nm, 400 nm ≤ D50 ≤ 610 nm, 400 nm ≤ D50 ≤ 600 nm, 410 nm ≤ D50 ≤ 590 nm, 450 nm ≤ D50 ≤ 600 nm, or 470 nm ≤ D50 ≤ 590 nm. Otherwise, the pore diameter of the separator may satisfy 710 nm ≤ D90 ≤ 950 nm, 720 nm ≤ D90 ≤ 940 nm, 730 nm ≤ D90 ≤ 930 nm, 740 nm ≤ D90 ≤ 930 nm, 750 nm ≤ D90 ≤ 920 nm, or 760 nm ≤ D90 ≤ 920 nm.

In an example embodiment, a measurement method of the pore diameter is not regarded as being necessarily limited to the measurement method described in the present specification, and a known method or other methods may be used.

According to an example embodiment, the pore diameter may be measured by a pore analysis method comprising the following steps: (S1) impregnating a separator in a liquid fat/oil, and then taking out and drying the separator; (S2) dying the dried separator; (S3) cutting a cross section of the separator at regular intervals using focused ion beam-scanning electron microscope (FIB/SEM) equipment and then obtaining a cross section SEM image; and (S4) creating a three-dimensional separator image using the cross sectional SEM image.

In an example embodiment, after (S2), (S2-A) forming a coating layer comprising a transition metal on a surface of the dyed separator may be further comprised, and the transition metal may comprise platinum (Pt), cobalt (Co), iron (Fe), nickel (Ni), palladium (Pd), ruthenium (Ru), titanium (Ti), vanadium (V), chromium (Cr), silver (Ag), cadmium (Cd), or an oxide thereof.

In an example embodiment, (S3) may comprise: (S3-A) forming a platinum (Pt) film (or a film of another transition metal as Pt) on a predetermined area of a separator surface; (S3-B) etching an outer area of a predetermined area on which the platinum film is formed with a trench pattern; and (S3-C) cutting a cross section of the separator at predetermined intervals using focused ion beam-scanning electron microscope (FIB/SEM) equipment and then obtaining a cross-sectional SEM image.

In an example embodiment, after (S4), (S5) selectively separating a ceramic inorganic particle image from the three-dimensional separator image to obtain a three-dimensional shape structure image of the ceramic coating layer may be further comprised. Then, three-dimensional image analysis can be better related to the pores specifically, rather than being confused or affected by an image analysis/observation/artefact derived from ceramic inorganic particles.

In an example embodiment, after (S5), (S6) analyzing a size distribution of pores in a ceramic coating layer from the three-dimensional ceramic coating layer shape structure image may be further comprised.

In an example embodiment, the liquid fat/oil may be vegetable oil/fat, animal oil/fat (such as butter), processing oil/fat, waste oil, or a combination thereof.

The pore size described in the present specification may refer to a pore size of an inorganic particle layer formed on the surface of the separator.

In an example embodiment, the separator may comprise a porous substrate and an inorganic particle layer comprising inorganic particles on at least one surface of the porous substrate. When the inorganic particle layer is formed on the porous substrate, the inorganic particle layer may be formed on any one surface or both surfaces of the porous substrate.

In an example embodiment, the type of inorganic particles comprised in the inorganic particle layer is not particularly limited as long as the inorganic particles are known to be electrochemically stable. For example, any one or more of boehmite, $BaSO_4$, $CeO_2$, $MgO$, $CaO$, $ZnO$, $Al_2O_3$, $TiO_2$, $BaTiO_3$, $HfO_2$, $SrTiO_3$, $SnO_2$, $NiO$, $ZrO_2$, $Y_2O_3$, and/or $SiC$ may be comprised.

In an example embodiment, an average particle diameter (D50) of the inorganic particles may be appropriately selected depending on the experiment conditions and the purpose as long as the average pore diameter range of the separator according to an example embodiment is satisfied, and is not necessarily limited to a certain range. For example, the average particle diameter of the inorganic particles may be 0.01 μm to 10.0 μm. Or it may be 0.01 μm to 5.0 μm, 0.1 μm to 10.0 μm, 0.1 μm to 5.0 μm, 0.1 μm to 3.0 μm, 0.1 μm to 1.0 μm.

Otherwise, the inorganic particles may be a mixture of 1, 2, 3, or more types of inorganic particles having different average particle diameters. Such a mixture may be observed to show mono-, di-, tri- or further multi-modal particle size distribution. Such mono-, di-, tri- or multi-modal particle size distribution may preferably be observed in the mixture of inorganic particles before being added to a coating slurry, i.e. when using such two or more types of inorganic particles in terms of size. For example, the inorganic particles may be a mixture of any one or more of first inorganic particles having an average particle diameter of 0.10 μm to 0.54 μm, 0.10 μm to 0.50 μm, 0.20 μm to 0.40 μm, 0.30 μm to 0.40 μm, or about 0.35 μm; second inorganic particles having an average particle diameter of 0.55 μm to 1.0 μm, 0.60 μm to 0.90 μm, 0.60 μm to 0.80 μm, 0.70 μm to 0.80 μm, or about 0.75 μm; and/or third inorganic particles having an average particle diameter of 0.01 μm to 3.0 μm, 0.1 μm to 2.0 μm, or 0.1 μm to 1.0 μm. For example, the inorganic particles may comprise the first (or first type) inorganic particles and the second (or second type) inorganic particles, or the first inorganic particles and the third (or third type) inorganic particles. Herein, as to the inorganic particle material, the first inorganic particles, the second inorganic particles, and the third inorganic particles may be identical or different type and/or particle diameter.

In an example embodiment, when inorganic particles having two average particle diameters different from each other are used (i.e. using two types of inorganic particles in terms of size), though the weight ratio is not particularly limited, they may be, for example, mixed at 20:80 to 80:20, 30:70 to 70:30, 50:50 to 80:20, 70:30, or 50:50. For example, the inorganic particles may comprise the first inorganic particles and the second inorganic particles at a weight ratio of 20:80 to 80:20, 30:70 to 70:30, 50:50 to 80:20, 30:70, 50:50, or 70:30. However, these show only examples, and the inorganic particles are not necessarily mixed at the weight ratio. Herein, the first inorganic particles and the second inorganic particles (or optionally further inorganic particles) may be identical or different type.

In an example embodiment, the inorganic particle layer may further comprise a binder. The binder may be appropriately selected by an ordinary person skilled in the art disclosed in the present application according to the purpose and situation from known binders. In an example embodiment, the binder may comprise a polymer, and, for example, may comprise any one or more selected from the group consisting of ester-based polymers, amide-based polymers, imide-based polymers, acryl-based polymers, acrylamide-based polymers, vinylalcohol-based polymers, fluorine-based polymers, and/or vinylpyrrolidone-based polymers. In an example embodiment, the binder may comprise an acrylamide-based polymer. Otherwise, for example, the binder may comprise a polymer prepared from any one or more monomers of (meth)acrylamide-based monomers, hydroxyl group-containing (meth)acryl-based monomers, and/or polyfunctional (meth)acrylamide-based monomers, and is not limited as long as the binder is used as a binder of the inorganic particle layer in which the inorganic particles formed on the surface of the porous substrate of the separator for a secondary battery are connected to each other by the binder to form pores.

In an example embodiment, a content of the binder may be appropriately adjusted according to the situation and purpose within a range satisfying the average pore diameter range of the separator. For example, the content of the binder may be 0.1 parts by weight to 20.0 parts by weight, 0.1 parts by weight to 15.0 parts by weight, 1.0 part by weight to 10.0 parts by weight, 1.0 part by weight to 5.0 parts by weight, or about 4.0 parts by weight, with respect to 100 parts by weight of the inorganic particles.

In an example embodiment, the binder (or a polymer comprised in the binder) may have a weight average molecular weight (Mw) of 50,000 g/mol to 2,000,000 g/mol, 50,000 g/mol to 1,000,000 g/mol, 50,000 g/mol to 500,000 g/mol, 50,000 g/mol to 300,000 g/mol, 100,000 g/mol to 300,000 g/mol, or about 150,000 g/mol, but is only an example, and the weight average molecular weight may be appropriately selected according to the experimental conditions as long as the surface roughness range of the separator is satisfied. The weight average molecular weight may be measured by gel permeation chromatography (GPC). Specifically, measurement of weight average molecular weight may be performed by using GPC (EcoSEC HLC-8320 GPC Refractive Index detector available from Tosoh Corporation) using TSKgel guard PWx, two columns of TSKgel GMPWxl and TSKgel G2500PWxl (7.8×300 mm) as a GPC column, a 0.1 M NaNO$_3$ aqueous solution as a developing solvent, and polyethylene glycol as a standard, and performing analysis at 40°C at a flow rate of 1 mL/min.

In an example embodiment, a dispersant may be appropriately selected from known dispersants, and is not necessarily limited to specific dispersants. For example, acrylate-based polymers, urethane-based polymers, silicon-based polymers, modified acrylate-based polymers, and similar or related dispersants may be used. Specifically, for example, BYK-151, BYK-154, DISPERBYK, BYK-420, BYK-E 420, BYK 300 series, BYK-017, and similar or related dispersant products may be used.

In an example embodiment, a content of the dispersant may be appropriately adjusted according to the situation and purpose within a range satisfying the average pore diameter range of the separator. For example, the content of the dispersant may be 0.01 parts by weight to 10.0 parts by weight, 0.1 parts by weight to 5.0 parts by weight, 0.1 parts by weight to 3.0 parts by weight, or 0.1 parts by weight to 2.0 parts by weight, with respect to 100 parts by weight of the inorganic particles.

In an example embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate, polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, teflon, and/or polytetrafluoroethylene, and any two or more of them may be used.

In an example embodiment, the thickness of the porous substrate is not particularly limited, and for example, may be 1 μm to 100 μm, 1 μm to 50 μm, 1 μm to 30 μm, 5 μm to 20 μm, or about 9 μm.

In an example embodiment, the thickness of the inorganic particle layer which may be formed on any one surface of the porous substrate may be, for example, 0.1 μm to 10.0 μm, 0.1 μm to 5.0 μm, 0.5 μm to 3.0 μm, 1.0 μm to 3.0 μm, or about 1.5 μm. In the case in which the inorganic particle layer is formed on both surfaces of the porous substrate, the thickness may be 0.2 μm to 15.0 μm, 0.3 μm to 10.0 μm, 1.0 μm to 8.0 μm, 2.0 μm to 5.0 μm, or about 3.0 μm.

In an example embodiment, the separator may have both shrinkage rates in the machine direction (MD) and the transverse direction (TD) of 5.0% or less after being allowed to stand at 150°C for 60 minutes, and the lower limit may be 0.5%. Specifically, the shrinkage rate may be 0.5% to 5.0%, 1.0% to 4.0%, or 1.0% to 3.0%.

In an example embodiment, when the separator comprises the inorganic particle layer, an air permeability change amount before and after coating of the inorganic particle layer may be 10 s/100 cc to 100 s/100 cc, 10 s/100 cc to 70 s/100 cc, 20 s/100 cc to 60 s/100 cc, 20 s/100 cc to 50 s/100 cc, or 20 s/100 cc or 40 s/100 cc. The air permeability is an air permeability (Gurley permeability) measured in accordance with ASTM D726.

In an example embodiment, the separator may have a moisture content after aged at 80°C for 12 hours of 300 ppm to 700 ppm, 300 ppm to 650 ppm, 350 ppm to 650 ppm, or 400 ppm to 600 ppm.

In an example embodiment, a peel strength between the porous substrate and the inorganic particle layer measured in accordance with ASTM D903 may be 30 gf/15 mm or more, 50 gf/15 mm or more, 60 gf/15 mm or more, or 80 gf/15 mm or more. Herein, the upper limit may be 200 gf/15 mm or less, 180 gf/15 mm or less, 150 gf/15 mm or less, 130 gf/15 mm or less, or 110 gf/15 mm or less.

The separator according to an example embodiment may have a low heat shrinkage rate and a moisture content at the most appropriate level for separator performance and battery performance implementation, by having the pore diameter size satisfying the predetermined average pore diameter range. Thus, charge/discharge performance and life characteristics of a battery are excellently implemented. When the pore diameter range of the separator is not satisfied, the moisture content of the separator is high, and thus, performance degradation may occur due to the side reaction by moisture of a rechargeable battery, or the heat resistance or the battery resistance of the separator is high, so that thermal stability and battery performance may not be sufficiently implemented.

When the separator according to an example embodiment comprises the inorganic particle layer, it may be manufactured by preparing a composition for forming an inorganic particle layer comprising inorganic particles; and applying (or coating) the composition for forming an inorganic particle layer on at least one surface of the porous substrate and then drying to form the inorganic particle layer. In addition, in an example embodiment, before forming the inorganic particle layer, surface-treating the porous substrate may be further comprised. The surface treatment may be performed by introducing a polar group to the surface by a corona discharge treatment.

In an example embodiment, a solvent used in the composition for forming an inorganic particle layer is not particularly limited, and when the composition comprises the binder, a solvent which is easy to dissolve or disperse the binder may be selected. For example, water, acetone, ethanol, tetrahydrofuran, methylene chloride, chloroform, cyclohexane, dimethylformamide, and/or N-methyl-2-pyrrolidone may be used.

In an example embodiment, the composition for forming an inorganic particle layer may be a slurry, and a solid content of the slurry may be, for example, 20 wt% to 50 wt%, 20 wt% to 40 wt%, 25 wt% to 35 wt%, or 30 wt% to 35 wt%.

In an example embodiment, a method for applying or coating the composition for forming an inorganic particle layer on the porous substrate is not particularly limited, but for example, roll coating, spin coating, dip coating, bar coating, die coating, slit coating, or inkjet printing may be used.

In an example embodiment, the drying may be performed by drying by warm air, hot air, or low-humidity air, vacuum drying, irradiation with far infrared rays or electron beams, and optionally other drying techniques. Since the drying temperature is not particularly limited, it may be appropriately adjusted depending on the experimental environment or the purpose, and for example, may be 30°C to 120°C, 30°C to 100°C, 50°C to 80°C, 50°C to 70°C, or about 65°C. The drying time is not particularly limited, but may be 30 seconds to 300 seconds, 60 seconds to 300 seconds, 100 seconds to 300 seconds, 150 seconds to 250 seconds, or about 180 seconds.

As described above, the pore diameter range of the separator of an example embodiment may be implemented by various means, and may be adjusted by the size of the inorganic particles, the distribution degree of the inorganic particles, the type and content of the binder, the solid content of the slurry, the preparation conditions of the slurry, the viscosity of the slurry, the drying conditions (temperature, speed), a coating speed, flattening means using a smoothing bar, and optionally further influencing factors.

Another example embodiment provides an electrochemical device comprising the separator according to an example embodiment, and the electrochemical device may be a secondary battery or a lithium secondary battery.

Another example embodiment provides an method for producing a separator, comprising the steps of:

providing a porous substrate,
applying a slurry comprising inorganic particles to one or both of the surface (s) of the porous substrate in order to provide inorganic particle layer(s) on one or both sides of the porous substrate, respectively;
wherein the obtained substrate satisfies the following Equations 1 to 3 when pore sizes of the separator, D10 diameter, D50 diameter, and D90 diameter are D10, D50, and D90, respectively:

$$180 \text{ nm} \leq D10 \leq 350 \text{ nm} \qquad \text{(Equation 1)}$$

$$380 \text{ nm} \leq D50 \leq 650 \text{ nm} \qquad \text{(Equation 2)}$$

$$670 \text{ nm} \leq D90 \leq 1000 \text{ nm} \qquad \text{(Equation 3)}.$$

In an example embodiment, wherein the manufacturing conditions for obtaining the pore sizes according to Equations 1 to 3 are selected from one or more of the following conditions, respectively alone or in combination: type of the porous substrate;

content and type of a binder, of a dispersant, and/or of a lubricant;
solid content of the slurry;
rotation speed and/or bead size in a slurry preparation step; use or absence of a smoothing bar when applying the slurry on the porous substrate;
coating speed;
drying temperature;

type of the electrolyte suitable for a battery is; and type of inorganic materials comprised in the inorganic particle layer, selected from average particle diameter and or distribution of particle size, and/or weight ratio of different types of inorganic particles;

preferably wherein the manufacturing conditions include selecting the type of inorganic particles comprised in the inorganic particle layer, wherein the average particle diameter (D50) falls within a predetermined range, or wherein the inorganic particles comprise a mixture of one or more types of inorganic particles, wherein the one or more types of inorganic particles differ by having average particle diameters (D50) different from each other.

Hereinafter, the constituent elements of the secondary battery according to the present disclosure will be further described.

[Positive electrode]

A positive electrode may comprise a positive electrode current collector and a positive electrode mixture layer disposed on at least one surface of the positive electrode current collector.

(Positive electrode current collector)

The positive electrode current collector may comprise stainless steel, nickel, aluminum, titanium, or an alloy thereof. The positive electrode current collector may comprise carbon, nickel, titanium, or aluminum which is surface treated with silver, or stainless steel. Though the positive electrode current collector is not limited thereto, it may be, for example, 10 um to 50 $\mu$m.

(Positive electrode material)

A positive electrode mixture layer may comprise a positive electrode active material. The positive electrode active material may comprise a compound which may reversibly intercalate and deintercalate lithium ions.

According to example embodiments, the positive electrode active material may be used without limitation as long as it is a conventionally used positive electrode active material, and for example, the positive electrode active material may comprise a lithium-nickel metal oxide. The lithium-nickel metal oxide may further comprise at least one of cobalt (Co), manganese (Mn), and aluminum (Al).

The positive electrode active material may further comprise a coating element or a doping element. For example, the auxiliary elements described above and elements substantially identical or similar thereto may be used as a coating element or a doping element. For example, among the elements described above, a single or a combination of two or more is used as a coating element or a doping element.

The positive electrode active material may comprise a nickel-cobalt-manganese (NCM)-based lithium oxide. In this case, an NCM-based lithium oxide having an increased nickel content may be used.

The content of Ni in the NCM-based lithium oxide (for example, the mole fraction of nickel of the total moles of nickel, cobalt, and manganese) may be 0.6 or more, 0.7 or more, or 0.8 or more. In some example embodiment, the content of Ni may be 0.8 to 0.95, 0.82 to 0.95, 0.83 to 0.95, 0.84 to 0.95, 0.85 to 0.95, or 0.88 to 0.95.

In some example embodiments, the positive electrode active material may comprise a lithium cobalt oxide-based active material, a lithium manganese oxide-based active material, a lithium nickel oxide-based active material, or a lithium iron phosphate (LFP)-based active material (for example, $LiFePO_4$).

(Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further comprise a binder, and may optionally further comprise a conductive material, a thickener, and possibly further components.

(Positive electrode solvent)

A non-limiting example of the solvent used in the preparation of the positive electrode mixture may comprise N-methyl-2-pyrrolidone (NMP), dimethyl formamide, dimethyl acetamide, N,N-dimethylaminopropylamine, ethylene oxide, tetrahydrofuran, and optionally similar or related solvents.

(Positive electrode binder)

The binder may comprise polyvinylidene fluoride (PVDF), poly(vinylidene fluoride-co-hexafluoropropylene, polyacrylonitrile, polymethyl methacrylate, acrylonitrile butadiene rubber (NBR), polybutadiene rubber (BR), styrene-butadiene rubber (SBR), and optionally similar or related polymer binders. In an example embodiment, a PVDF-based binder may be used as a positive electrode binder.

(Positive electrode conductive material)

The conductive material may be added for increasing conductivity of the positive electrode mixture layer and/or mobility of lithium ions or electrons. For example, the conductive material may comprise carbon-based conductive materials such as graphite, carbon black, acetylene black, ketjen black, graphene, carbon nanotubes, vapor-grown carbon fiber (VGCF), and carbon fiber, and/or metal-based conductive materials comprising tin oxide, titanium oxide, perovskite materials such as $LaSrCoO_3$, $LaSrMnO_3$, but is not limited thereto.

(Positive electrode thickener/ dispersant)

If necessary, the positive electrode mixture may further comprise a thickener and/or a dispersant and optionally further components. In an example embodiment, the positive electrode mixture may comprise a thickener such as carboxymethyl cellulose (CMC).

[Negative electrode]

The negative electrode may comprise a negative electrode current collector and a negative electrode mixture layer disposed on at least one surface of the negative electrode current collector.

(Negative electrode current collector)

A non-limiting example of the negative electrode current collector may comprise a copper foil, a nickel foil, a stainless steel foil, a titanium foil, a nickel foam, a copper foam, a polymer substrate coated with a conductive metal, and optionally similar or related current collector materials. The negative electrode current collector is not limited, but may be, for example, 10 to 50 $\mu$m.

(Negative electrode material)

The negative electrode mixture layer may comprise a negative electrode active material. As the negative electrode active material, a material capable of adsorbing or desorbing lithium ions may be used. For example, the negative electrode active material may be carbonaceous material such as crystalline carbon, amorphous carbon, carbon composite, and carbon fiber; lithium metal; lithium alloy; a silicon (Si)-containing material, a tin (Sn)-containing material, or the like.
An example of the amorphous carbon may comprise hard carbon, soft carbon, coke, mesocarbon microbead (MCMB), mesophase pitch-based carbon fiber (MPCF), and others.
An example of the crystalline carbon may comprise graphite-based carbon such as natural graphite, artificial graphite, graphitized coke, graphitized MCMB, and graphitized MPCF.
The lithium metal may comprise a pure lithium metal or a lithium metal on which a protective layer is formed for suppressing dendrite growth. In an example embodiment, a lithium metal-containing layer which is deposited or coated on a negative electrode current collector may be used as a negative electrode active material. In an example embodiment, a lithium thin film layer may be used as a negative electrode active material layer.
An element comprised in the lithium alloy may comprise aluminum, zinc, bismuth, cadmium, antimony, silicon, lead, tin, gallium, indium, or the like.
The silicon-containing material may provide a more increased capacity characteristic. The silicon-containing material may comprise Si, $SiO_x$ (0<x<2), metal-doped $SiO_x$ (0<x<2), a silicon-carbon composite, and optionally similar or related Si-containing materials. The metal may comprise lithium and/or magnesium, and the metal-doped $SiO_x$ (0<x<2) may comprise metal silicate.

(Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further comprise a binder, and may optionally further comprise a conductive material, a thickener, and possibly further components.

In some example embodiments, the negative electrode may comprise a negative electrode active material layer in a lithium metal form formed by a deposition/coating process.

(Negative electrode solvent)

A non-limiting example of the solvent for a negative electrode mixture may comprise water, pure water, deionized water, distilled water, ethanol, isopropanol, methanol, acetone, n-propanol, t-butanol, and optionally similar or related solvents.

(Negative electrode binder/ conductive material/ thickener)

As the binder, the conductive material, and the thickener, the materials described above which may be used in the manufacture of a positive electrode may be used.

In some example embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and optionally similar or related polymer binder materials may be used as a negative electrode binder.

[Electrode assembly]

According to example embodiments, the positive electrode, the negative electrode, and the separator may be repeatedly disposed to form an electrode assembly. In some example embodiments, the electrode assembly may be a winding type, a stacking type, a zigzag (z)-folding type, or a stack-folding type.

[Electrolyte]

A lithium secondary battery may be defined by housing the electrode assembly in a case with an electrolyte. According to example embodiments, a nonaqueous electrolyte solution may be used as the electrolyte.

(Lithium salt/ organic solvent)

A nonaqueous electrolyte solution comprises a lithium salt as an electrolyte and an organic solvent, the lithium salt is represented by, for example, $Li^+X^-$, and an example of an anion ($X^-$) of the lithium salt may comprise $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and optionally similar or related anions.

The organic solvent has sufficient solubility of the lithium salt or the additive, and may comprise an organic compound having no reactivity in a battery. The organic solvent may comprise, for example, at least one of carbonate-based solvents, ester-based solvents, ether-based solvents, ketone-based solvents, alcohol-based solvents, and aprotic solvents. An example of the organic solvent may comprise propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, diethoxyethane, sulfolane, gamma-butyrolactone, propylene sulfite, and optionally similar or related solvents. These may be used alone or in combination of two more.

(Additive)

The nonaqueous electrolyte solution may further comprise an additive. The additive may comprise, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds. The cyclic carbonate-based compound may be vinylene carbonate (VC), vinylethylene carbonate (VEC), or optionally similar or related additive compounds. The fluorine-substituted cyclic carbonate-based compound may comprise, for example, fluoroethylene carbonate (FEC) and optionally similar or related compounds. The sultone-based compound may comprise, for example, 1,3-propane sultone, 1,3-propene sultone, 1,4-butane sultone, and optionally similar or related compounds. The cyclic sulfate-based compound may comprise, for example, 1,2-ethylene sulfate, 1,2-propylene sulfate, and optionally similar or related compounds. The cyclic sulfite-based compound may comprise, for example, ethylene sulfite, butylene sulfite, and optionally similar or related compounds. The phosphate-based compound may comprise, for example, lithium difluoro bis-oxalato phosphate, lithium difluoro phosphate, and optionally similar or related compounds. The borate-based compound may comprise, for example, lithium bis(oxalate) borate and optionally similar or related compounds.

Hereinafter, the examples and the experimental examples will be illustrated specifically in detail in the following. However, since the examples and the experimental examples described later only illustrate a part of one example embodiment, the technology described in the present specification should not be construed as being limited thereto.

<Experimental method>

1. Measurement of average pore diametere (D10, D50, D90)

The manufactured separator from the example was cut into a size of about 3 cm $\times$ 2 cm, impregnated in a liquid phase prepared by putting a small amount of butter into a vial and heating at a temperature of 60°C, placed in a vacuum oven, allowed to stand at 60°C under a vacuum condition for about 60 minutes, taken out of the oven, wiped to remove excessive butter on the outside, and dried at room temperature for 30 minutes or more. Then, the separator was placed in a chamber under a $OsO_4$ gas atmosphere, and a butter area was dyed for 18 hours.

The dyed separator was attached to a stub for scanning electron microscope (SEM) analysis, and then the surface of the separator was coated by a Pt coater (50 mA, 60 sec). The coated separator was placed in focused ion beam-scanning electron microscope (FIB/SEM) equipment capable of continuous cutting and image capture, Pt deposition was performed on each area of 10 μm $\times$ 10 μm $\times$ 2 um on the surface of the separator under the conditions of 30 kV, 0.4 - 0.9 nA, rectangle pattern, thereby forming a Pt film. Next, a cross section was cut at 10 nm intervals and a cross-sectional SEM image was secured (software: Auto Slice An View, Thermo Fisher Scientific™). The secured image was connected to an image processing software (Avizo, Thermo Fisher Scientific™) to create a three-dimensional image of the separator. Inorganic particles were selectively separated from the three-dimensional image secured using a software of GeoDict available from Math2Market GmbH to create the three-dimensional shape structure of the separator. Next, pores in the inorganic particle layer was evaluated using the function of Identify Pore of GeoDict. At this time, in order to distinguish overlapping pores, the critical value was set to 25%, and in order to selectively evaluate only the pores in the inorganic particle layer, pores adjacent to the boundary of the three-dimensional structure were excluded from the evaluation. The diameter of the pores was evaluated by conversion with Volume-Equivalent Diameter.

2. Measurement of heat shrinkage rate

A heat shrinkage rate was measured as follows, based on ASTM D1204. The manufactured separator was cut into a square shape with a side of 10 cm and grid points were marked at 2 cm intervals. At this time, one side of the square was in the transverse direction (TD) and the other side was in the machine direction (MD). A specimen was placed in the center, 7 sheets of paper were placed each on and under the specimen, and the four sides of the paper were wrapped with tape. The sample wrapped with paper was allowed to stand in a hot air oven at a temperature of 150°C for 60 minutes. Thereafter, the specimen was taken out, the separator was observed with a camera, and the shrinkage rate in the machine direction (MD) of the following Mathematical Formula 1 and the shrinkage rate in the transverse direction (TD) of the following Mathematical Formula 2 were calculated:

Shrinkage rate in MD (%) = (length in MD before heating - length in MD after heating) $\times$ 100 / length in MD before heating                     [Mathematical Formula 1]

Shrinkage rate in TD (%) = (length in TD before heating - length in TD after heating) $\times$ 100 / length in TD before heating                     [Mathematical Formula 2]

3. Measurement of air permeability

Each of separator air permeabilities (Gurley permeability) before and after coating was measured in accordance with the standard of ASTM D726 using a densometer (Toyoseiki Ltd.) and the change value was measured. The air permeability was obtained by recording a time it took 100 cc of air to pass through a separator having an area of 1 in$^2$ in seconds.

4. Measurement of peel strength

Peel strength between the porous substrate and the inorganic particle layer was measured using a 180° peel test method (ASTM D903) using a tensile measurement device (3343) available from INSTRON GmbH.

5. Measurement of moisture content

The moisture content of the separator was measured using a Karl Fischer method. Specifically, the moisture content was measured using the weight of moisture occurring when 0.3 g of a separator sample was heated to 150°C using Karl Fischer Titrator (Metrohm Inc.).

6. Measurement of battery resistance

After aging and degassing a battery, the battery was fully charged to 4.2 V and the initial resistance of the battery was measured by a J-pulse method.

7. Measurement of thickness

Thickness of separator: the separators were overlapped in 10 layers, each thickness was measured at 5 random points in the transverse direction with a thickness meter available from Mitutoyo, an average thickness of a 10-layer separator was derived, and the value was divided by 10 again to derive an overall average thickness of a single separator.

Thickness of porous film: the average thickness of the porous film was derived by overlapping only the porous film in 10 layers, measuring the thickness at 5 random points in the transverse direction with a thickness meter available from Mitutoyo, deriving the average thickness of the 10-layer porous film, and dividing it by 10 again.

Thickness of inorganic particle layer: the thickness was derived as a value calculated by subtracting an average thickness of the single porous film from the entire average thickness of the single separator determined by the method described above.

### <Example 1>

**Manufacture of separator**

Each of boehmite having average particle diameters (D50) of 0.35 um and 0.75 um was added to distilled water at a weight ratio of 7:3, 1 wt% of a dispersant (BYK-154) and 4 wt% of a polyacryl amide-based binder with respect to the weight of the boehmite were added, and ball mill stirring was performed to prepare a slurry having a solid content of 32 wt%.

Both surfaces of a polyethylene porous film having a thickness of 9 um (porosity: 40%, Gurley permeability: 160 s/100 cc, tensile strength MD: 2240 kgf/cm$^2$, TD: 1860 kgf/cm$^2$) was corona-discharged (power density: 2 W/mm, rate: about 3-5 mpm (meter per minute)) to introduce a surface polar group. Subsequently, the slurry prepared above was applied on both surfaces of the surface-treated porous film, and the film was allowed to stand at room temperature for 10 minutes. Thereafter, the film was dried in a dryer at 65°C for 3 minutes to form each inorganic particle layer having a thickness of 1.5 um, and then aged at 80°C for 12 hours.

**Manufacture of battery**

94 wt% of $LiCoO_2$ as a positive electrode active material, 2.5 wt% of polyvinylidene fluoride as a fusing agent, and 3.5 wt% of carbon black as a conductive agent were added to N-methyl-2-pyrrolidone (NMP) as a solvent, and stirring was performed to prepare a uniform positive electrode slurry. The slurry was coated on an aluminum foil having a thickness of 30 $\mu$m, dried, and pressed to manufacture a positive electrode plate having a thickness of 150 $\mu$m.

95 wt% of artificial graphite as a negative electrode active material, 3 wt% of acrylic latex having Tg of -52°C (solid content: 20 wt%), and 2 wt% of carboxymethyl cellulose (CMC) as a thickener were added to water as a solvent, and stirring was performed to produce a uniform negative electrode slurry. The slurry was coated on a copper foil having a thickness of 20 $\mu$m, dried, and pressed to manufacture a negative electrode plate having a thickness of 150 um.

The separator manufactured above was used between the positive electrode and the negative electrode manufactured above to assemble a pouch type battery in a stacking manner, and an electrolyte solution of ethylene carbonate (EC)/ethyl methyl carbonate (EMC)/dimethyl carbonate (DMC) = 3:5:2 (volume ratio) in which 1 M lithium

hexafluorophosphate (LiPF$_6$) was dissolved was injected to manufacture a lithium secondary battery having a capacity of 2 Ah.

**<Example 2>**

A battery was manufactured in the same manner as in Example 1, except that each of inorganic particles having average particle diameters (D50) of 0.35 um and 0.75 um was used at a weight ratio of 1:1 in the manufacture of the separator.

**<Example 3>**

A battery was manufactured in the same manner as in Example 1, except that each of inorganic particles having average particle diameters (D50) of 0.35 um and 0.75 um was used at a weight ratio of 3:7 in the manufacture of the separator.

**<Example 4>**

A battery was manufactured in the same manner as in Example 1, except that inorganic particles having an average particle diameter (D50) of 0.4 um were used in the manufacture of the separator.

**<Comparative Example 1>**

**Manufacture of separator**

Boehmite having an average particle diameter (D50) of 0.2 um and 2 wt% of a dispersant (BYK-154) with respect to the weight of the boehmite were added to distilled water, ball mill stirring (200 rpm, 10 minutes) was performed, 4 wt% of a polyacrylamide-based binder with respect to the weight of the boehmite was added, and then ball mill stirring was further performed, thereby preparing a slurry having a solid content of 45 wt%.
Both surfaces of a polyethylene porous film having a thickness of 9 um (porosity: 40%, Gurley permeability: 160 s/100 cc, tensile strength MD: 2240 kgf/cm$^2$, TD: 1860 kgf/cm$^2$) was corona-discharged (power density: 2 W/mm, rate: about 3-5 mpm (meter per minute)) to introduce a surface polar group. Subsequently, the slurry prepared above was applied on both surfaces of the surface-treated porous film, and the film was allowed to stand at room temperature for 10 minutes. Thereafter, the film was dried in a dryer at 45°C for 10 minutes to form each inorganic particle layer having a thickness of 1.5 um, and then aged at 100°C for 12 hours.

**Manufacture of battery**

A battery was manufactured in the same manner as in Example 1.

**<Comparative Example 2>**

**Manufacture of separator**

0.7 wt% of a dispersant (BYK-154) with respect to the weight of the boehmite was added to distilled water, boehmite having an average particle diameter (D50) of 1.6 um and 4 wt% of a polyacryl amide-based binder with respect to the weight of the boehmite were added, and ball mill stirring was performed to prepare a slurry having a solid content of 32 wt%.
Both surfaces of a polyethylene porous film having a thickness of 9 um (porosity: 40%, Gurley permeability: 160 s/100 cc, tensile strength MD: 2240 kgf/cm$^2$, TD: 1860 kgf/cm$^2$) was corona-discharged (power density: 2 W/mm, rate: about 3-5 mpm (meter per minute)) to introduce a surface polar group. Subsequently, the slurry prepared above was applied on both surfaces of the surface-treated porous film, and the film was allowed to stand at room temperature for 10 minutes. Thereafter, the film was dried in a dryer at 45°C for 10 minutes to form each inorganic particle layer having a thickness of 2.2 um, and then aged at 80°C for 12 hours.

**Manufacture of battery**

A battery was manufactured in the same manner as in Example 1.

**<Comparative Example 3>**

1.5 wt% of a dispersant (BYK-154) with respect to the weight of boehmite and boehmite having an average particle diameter (D50) of 0.3 um were added to distilled water, ball mill stirring (200 rpm, 10 minutes) was performed, 4 wt% of a polyacrylamide-based binder with respect to the weight of the boehmite was added, and then ball mill stirring was further performed, thereby preparing a slurry having a solid content of 32 wt%.

Both surfaces of a polyethylene porous film having a thickness of 9 um (porosity: 40%, Gurley permeability: 160 s/100 cc, tensile strength MD: 2240 kgf/cm$^2$, TD: 1860 kgf/cm$^2$) was corona-discharged (power density: 2 W/mm, rate: about 3-5 mpm (meter per minute)) to introduce a surface polar group. Subsequently, the slurry prepared above was applied on both surfaces of the surface-treated porous film, and the film was allowed to stand at room temperature for 10 minutes. Thereafter, the film was dried in a dryer at 45°C for 10 minutes to form each inorganic particle layer having a thickness of 1.5 um, and then aged at 100°C for 12 hours.

**Manufacture of battery**

A battery was manufactured in the same manner as in Example 1.

**<Comparative Example 4>**

0.7 wt% of a dispersant (BYK-154) with respect to the weight of boehmite and each boehmite having average particle diameters (D50) of 0.5 um and 1.3 um were added to distilled water at a weight ratio of 1:1, ball mill stirring (200 rpm, 10 minutes) was performed, 4 wt% of a polyacrylamide-based binder with respect to the weight of the boehmite was added, and then ball mill stirring was further performed, thereby preparing a slurry having a solid content of 32 wt%.

Both surfaces of a polyethylene porous film having a thickness of 9 um (porosity: 40%, Gurley permeability: 160 s/100 cc, tensile strength MD: 2240 kgf/cm$^2$, TD: 1860 kgf/cm$^2$) was corona-discharged (power density: 2 W/mm, rate: about 3-5 mpm (meter per minute)) to introduce a surface polar group. Subsequently, the slurry prepared above was applied on both surfaces of the surface-treated porous film, and the film was allowed to stand at room temperature for 10 minutes. Thereafter, the film was dried in a dryer at 45°C for 10 minutes to form each inorganic particle layer having a thickness of 1.5 $\mu$m, and then aged at 100°C for 12 hours.

**Manufacture of battery**

A battery was manufactured in the same manner as in Example 1.

**<Comparative Example 5>**

0.7 wt% of a dispersant (BYK-154) with respect to the weight of boehmite and each boehmite having average particle diameters (D50) of 0.2 $\mu$m and 0.5 $\mu$m were added to distilled water at a weight ratio of 2:8, ball mill stirring (200 rpm, 10 minutes) was performed, 4 wt% of a polyacrylamide-based binder with respect to the weight of the boehmite was added, and then ball mill stirring was further performed, thereby preparing a slurry having a solid content of 32 wt%..

Both surfaces of a polyethylene porous film having a thickness of 9 um (porosity: 40%, Gurley permeability: 160 s/100 cc, tensile strength MD: 2240 kgf/cm$^2$, TD: 1860 kgf/cm$^2$) was corona-discharged (power density: 2 W/mm, rate: about 3-5 mpm (meter per minute)) to introduce a surface polar group. Subsequently, the slurry prepared above was applied on both surfaces of the surface-treated porous film, and the film was allowed to stand at room temperature for 10 minutes. Thereafter, the film was dried in a dryer at 45°C for 10 minutes to form each inorganic particle layer having a thickness of 1.5 $\mu$m, and then aged at 100°C for 12 hours.

**Manufacture of battery**

A battery was manufactured in the same manner as in Example 1.

The average pore sizes (D10, D50, D90) and the physical properties of the separators manufactured in the examples and the comparative examples, and battery resistance were measured, and the results are shown in the following Tables 1 and 2.

[Table 1]

| | Average pore size (nm) | | |
|---|---|---|---|
| | D10 | D50 | D90 |
| Example 1 | 230 | 470 | 760 |
| Example 2 | 260 | 510 | 830 |
| Example 3 | 310 | 590 | 920 |
| Example 4 | 270 | 410 | 750 |
| Comparative Example 1 | 80 | 320 | 635 |
| Comparative Example 2 | 510 | 760 | 1030 |
| Comparative Example 3 | 228 | 365 | 786 |
| Comparative Example 4 | 324 | 580 | 1200 |
| Comparative Example 5 | 150 | 560 | 830 |

[Table 2]

| | Heat shrinkage rate MD/TD (%) | Air permeability (s/100 cc) | Moisture content (ppm) | Peel strength (gf/15 mm) | Battery resistance (mΩ) |
|---|---|---|---|---|---|
| Example 1 | 1.0/1.3 | 36 | 580 | 110 | 27.15 |
| Example 2 | 1.2/1.3 | 34 | 476 | 94 | 28.91 |
| Example 3 | 1.3/1.3 | 30 | 413 | 89 | 28.54 |
| Example 4 | 1.0/1.0 | 35 | 425 | 100 | 28.32 |
| Comparative Example 1 | 1.4/0.8 | 74.7 | 743 | 32 | 33.73 |
| Comparative Example 2 | 44/42 | 29.7 | 358 | 16 | 30.77 |
| Comparative Example 3 | 1.4/1.0 | 66 | 620 | 48 | 32.68 |
| Comparative Example 4 | 0.5/1.3 | 41.7 | 472 | 14 | 31.68 |
| Comparative Example 5 | 0.9/1.6 | 72.6 | 726 | 42 | 33.45 |

As confirmed from Tables 1 and 2, the separators of the examples in which the average pores sizes of the separator satisfied all of the ranges of 200 nm to 350 nm of D10, 400 nm to 650 nm of D50, and 700 nm to 950 nm of D90 had significantly excellent heat resistance as compared with the comparative examples and had high stability due to excellent adhesive strength of the inorganic particle layer on the porous substrate. Meanwhile, when any one of the average pore size ranges of the separator was not satisfied, battery resistance was increased due to a side reaction by moisture during battery charge and discharge with an excessively high moisture content of 700 ppm or more (Comparative Examples 1 and 5), thermal stability of the separator was significantly deteriorated (Comparative Example 2), or adhesive strength between the porous substrate and the inorganic particle layer was insufficient so that it was difficult to implement battery performance stability (Comparative Examples 1 to 5).

The present disclosure relates to a separator satisfying predetermined pore diameter ranges. The separator according to an example embodiment has improved heat resistance by satisfying the predetermined pore diameter ranges, and a battery comprising the separator may have improved performance.

Hereinabove, though an example embodiment has been described in detail by the examples and the experimental examples, the scope of the example embodiment is not limited to specific examples, and should be construed by the appended claims.

## Claims

1. A separator for an electrochemical device, which separator satisfies the following Equations 1 to 3 when pore sizes of the separator, D10 diameter, D50 diameter, and D90 diameter are D10, D50, and D90, respectively:

$$180 \ nm \ \leq \ D10 \ \leq \ 350 \ nm \qquad \text{(Equation 1)}$$

$$380 \ nm \ \leq \ D50 \ \leq \ 650 \ nm \qquad \text{(Equation 2)}$$

$$670 \ nm \ \leq \ D90 \ \leq \ 1000 \ nm \qquad \text{(Equation 3).}$$

2. The separator of claim 1, wherein the pore sizes of the separator satisfy all of the following Equations 1-1 to 1-3:

$$200 \ nm \ \leq \ D10 \ \leq \ 350 \ nm \qquad \text{(Equation 1-1)}$$

$$400 \ nm \ \leq \ D50 \ \leq \ 650 \ nm \qquad \text{(Equation 2-1)}$$

$$700 \ nm \ \leq \ D90 \ \leq \ 950 \ nm \qquad \text{(Equation 3-1).}$$

3. The separator of claim 1 or 2, wherein the separator comprises a porous substrate, and an inorganic particle layer comprising inorganic particles on at least one surface of the porous substrate.

4. The separator of any one of claims 1 to 3, wherein the Equations 1 to 3 or Equations 1-1 to 1-3 are satisfied when pore sizes of an inorganic particle layer of the separator are measured.

5. The separator of claim 3 or 4, wherein the inorganic particles comprise one or more selected from the group consisting of boehmite, $BaSO_4$, $CeO_2$, MgO, CaO, ZnO, $Al_2O_3$, $TiO_2$, $BaTiO_3$, $HfO_2$, $SrTiO_3$, $SnO_2$, NiO, $ZrO_2$, $Y_2O_3$, and SiC, preferably is boehmite.

6. The separator of any one of claims 3 to 5, wherein the inorganic particle layer further comprises a binder, preferably wherein the binder comprises any one or more selected from the group consisting of ester-based polymers, amide-based polymers, imide-based polymers, acryl-based polymers, acrylamide-based polymers, vinylalcohol-based polymers, fluorine-based polymers, and vinylpyrrolidone-based polymers.

7. The separator of any one of claims 3 to 6, wherein the inorganic particles have an average particle diameter (D50) of 0.1 um to 10.0 um, or 0.1 um to 5.0 um, or 0.1 um to 3.0 um, or 0.1 um to 1.0 um.

8. The separator of any one of claims 3 to 7, wherein the inorganic particles comprise a mixture of two or more types of inorganic particles, wherein the two or more types of inorganic particles differ by having average particle diameters (D50) different from each other.

9. The separator of claim 8, wherein the inorganic particles are a mixture of types of inorganic particles, wherein one type inorganic particles has an average particle diameter (D50) of 0.10 um to 0.54 um and another type of inorganic particles has an average particle diameter of 0.55 um to 1.0 $\mu$m.

10. The separator of any one of claims 3 to 9, wherein the inorganic particle layer has a thickness of 0.1 um to 10.0 $\mu$m.

11. The separator of any one of claims 1 to 10, wherein the separator has both shrinkage rates in the machine direction (MD) and in the transverse direction (TD) of 5.0% or less after being allowed to stand at 150°C for 60 minutes, and/or wherein a peel strength between the porous substrate and the inorganic particle layer measured in accordance with ASTM D903 is 50 gf/15 mm or more.

12. The separator of any one of claims 3 to 11, wherein the porous substrate has a thickness of 1 um to 50 $\mu$m.

13. A method for producing a separator, comprising the steps of:

providing a porous substrate,
applying a slurry comprising inorganic particles to one or both of the surface (s) of the porous substrate in order to provide inorganic particle layer(s) on one or both sides of the porous substrate, respectively;
wherein the obtained substrate satisfies the following Equations 1 to 3 when pore sizes of the separator, D10 diameter, D50 diameter, and D90 diameter are D10, D50, and D90, respectively:

$$180 \text{ nm} \leq D10 \leq 350 \text{ nm} \qquad \text{(Equation 1)}$$

$$380 \text{ nm} \leq D50 \leq 650 \text{ nm} \qquad \text{(Equation 2)}$$

$$670 \text{ nm} \leq D90 \leq 1000 \text{ nm} \qquad \text{(Equation 3).}$$

14. The method for producing a separator according to claim 13 for manufacturing a secondary battery, wherein the manufacturing conditions for obtaining the pore sizes according to Equations 1 to 3 are selected from one or more of the following conditions, respectively alone or in combination:

    type of the porous substrate;
    content and type of a binder, of a dispersant, and/or of a lubricant;
    solid content of the slurry;
    rotation speed and/or bead size in a slurry preparation step; use or absence of a smoothing bar when applying the slurry on the porous substrate;
    coating speed;
    drying temperature;
    type of the electrolyte suitable for a battery is; and
    type of inorganic materials comprised in the inorganic particle layer, selected from average particle diameter and or distribution of particle size, and/or weight ratio of different types of inorganic particles;
    preferably wherein the manufacturing conditions include selecting the type of inorganic particles comprised in the inorganic particle layer, wherein the average particle diameter (D50) falls within a predetermined range, or wherein the inorganic particles comprise a mixture of one or more types of inorganic particles, wherein the one or more types of inorganic particles differ by having average particle diameters (D50) different from each other.

15. An electrochemical device comprising the separator according to any one of claims 1 to 12, optionally wherein the electrochemical device is a secondary battery.